# EUROPÄISCHE PATENTSCHRIFT

(11) **EP 0 545 047 B1**
(45) Veröffentlichungstag und Bekanntmachung des Hinweises auf die Patenterteilung: **28.08.1996**
(21) Anmeldenummer: 92117668.1
(22) Anmeldetag: 16.10.1992
(51) Int. Cl.: B65B 51/14, B65B 65/02, B65B 51/22

(54) **Vorrichtung zum Verschweissen der Siegelnaht an einer Packung**
Apparatus for welding the sealing joint of a package
Machine pour souder le joint de scellage d'un emballage

(30) Priorität: 05.12.1991 DE 4140037
(43) Veröffentlichungstag der Anmeldung: 09.06.1993
(73) Patentinhaber: Tetra Laval Holdings & Finance SA, 1009 Pully (CH)
(72) Erfinder: Riedel, Thomas, W-6083 Biebesheim (DE)
(74) Vertreter: Weber, Dieter, Dr.

(56) Entgegenhaltungen:
- EP-A- 0 242 805
- WO-A-79/00972
- US-A- 4 479 834

## Beschreibung

Die Erfindung betrifft eine Vorrichtung zum Verschweißen der Siegelnaht an einer Packung, die wenigstens teilweise aus mit Kunststoff beschichtetem Papier besteht, mit einem Backen und Gegenbacken aufweisenden Schweißwerkzeug, einer Halterung und einer Antriebseinrichtung für die Erzeugung der Druckkraft.

In bekannten Packungsmaschinen werden Flüssigkeitspackungen in großer Stückzahl pro Zeiteinheit in solcher Weise hergestellt, daß aus einer Bahn von mit Kunststoff beschichtetem Papier bzw. Karton eine Hülse oder Hülse mit Boden geformt, einseitig verschlossen und dann zur Füllstation transportiert wird. Die füllbereite Packung steht bei diesen bekannten Maschinen leer auf dem Kopf, d.h. der gegebenenfalls die Ausgießeinrichtung aufweisende Deckel bildet die Standfläche, während der spätere Boden der Packung nach oben steht und offen ist. Durch diesen erfolgt das Befüllen der Packung, beispielsweise mit Milch oder Satt. In der bekannten Maschine wird die gefüllte Packung aus der Füllstation in eine Bodenfaltstation gefordert, und dort werden mittels Formbacken, -blechen und dergleichen die Bodenwandfelder so zusammengelegt, daß ein doppelt gelegter Kartonstreifen entsteht, in welchem eine Quersiegelnaht herzustellen ist. Nachdem diese hergestellt ist, ist auch eine Fließmittelpackung flüssigkeitsdicht und kann abgefördert werden.

Auf das Erstellen dieser Siegelnaht richtet sich die Erfindung speziell, und es wird eine Vorrichtung vorgeschlagen, mit der allgemein mit Hilfe von Backen und Gegenbacken Verschweißungen vorgenommen werden.

Es ist dem Fachmann auf dem Gebiet der Packungsmaschinen bekannt, daß die Dichtigkeit einerseits und eine wirtschaftlich günstige Herstellung von Siegelnähten andererseits ein kritischer und bei Herstellungsmaschinen häufig verbesserungsfähiger Punkt ist. Bei bekannten Packungsmaschinen werden Backen und Gegenbacken mittels Pneumatik- oder Hydraulikzylindern bewegt und so zusammengedrückt, daß die notwendige Schweißkraft entsteht. Sollen Lebensmittel verpackt werden, dann spielt die Hygiene eine besondere Rolle, welcher häufig die Schmiermittel entgegenwirken. Ohne solche leiden besonders beanspruchte Maschinenteile unter Verschleiß. Hydrauliksysteme können ohne Hydraulikflüssigkeit nicht in Betrieb genommen werden, und bei Undichtigkeiten gibt es hier Gefahren für die geforderte Hygiene.

Weiterer Wunsch des Packungsherstellers ist die Verbesserung der Wirtschaftlichkeit und bessere Raumausnutzung. Gewünscht ist eine besonders kompakte und leistungsfähige Maschine.

Man kann den Ausstoß einer Schweißstation der hier in Rede stehenden Art dadurch verdoppeln, daß man in der Schweißstation zwei Quersiegelnähte gleichzeitig erstellt. Damit wäre die Wirtschaftlichkeit erheblich verbessert, der Maschinenhersteller sollte aber auch wenig raumaufwendig bauen und muß selbstverständlich die auch bei bisherigen bekannten Maschinen vorgegebenen Randbedingungen einhalten, wie insbesondere Gewährleistung der notwendigen Hygiene. Letzteres ist bei pneumatischen und hydraulischen Systemen schwierig einzuhalten, und bei den Tellerfedersystemen ist es kaum möglich, über längere Zeit zwei nebeneinander angeordnete Schweißwerkzeuge mit nahezu gleichen Betriebsdrücken und hoher Geschwindigkeit funktionsgerecht im Einsatz zu halten.

Aus der europäischen Patentschrift EP-A-0.242.805 ist bereits eine Schweißvorrichtung für eine Siegelnaht an einer Packung bekannt, bei deren Aufbau man andere bekannte pneumatische und hydraulische Systeme verlassen hat. Bei dieser bekannten Vorrichtung ist ein mechanischer Antrieb gewählt, um zwei Schweißbacken mit nahezu gleicher Kraft auf die Stirnseite von Dornen eines Dornrades als Gegenbacken zu pressen und dadurch den Bodenverschluß einer Faltpackung zu erreichen. Die Bauweise der bekannten Vorrichtung hat erheblichen Raumbedarf, denn die Erwärmungsstation ist separat von der Station zum Aufbringen des Siegeldruckes angeordnet. Nachdem die Siegelflächen der Packung separat zuvor auf Siegeltemperatur gebracht worden sind, preßt ein Andruckstempel über einen Exzenter eine Druckplatte auf den Dorn. Durch diesen Aufbau sind die Amplituden der Bewegungen der Druckplatten sehr klein. Druckfedern spannen die Druckplatten gegenüber dem Antriebsschaft vor. Sie sind ungekapselt und bringen insbesondere bei der Verpackung von Lebensmitteln (Milch, Säfte) Hygieneprobleme mit sich.

Der Erfindung liegt daher die Aufgabe zugrunde, die vorstehend genannte Schweißvorrichtung derart auszugestalten, daß das Erwärmen und Pressen der Siegelnaht in einer einzigen Vorrichtung erfolgt und die Hygieneanforderungen durch gekapselte Bauweise besser eingehalten werden und dennoch an beiden Arbeitsstationen im wesentlichen gleiche Druckkräfte zur Verfügung stehen.

Diese Aufgabe wird erfindungsgemäß dadurch gelöst, daß zwei Schweißbacken über Antriebselemente um eine gemeinsame Achse drehbar auf jeweils einer getrennten äußeren Hohlwelle drehfest angebracht sind, jede äußere Hohlwelle mit einer gemeinsamen Drehstabfeder als Teil der Antriebseinrichtung drehfest verbunden ist und die Drehstabfeder im Bereich ihrer axialen Mitte von außen angetrieben ist. Erfindungsgemäß nimmt der mechanische Antrieb eine Drehstabfeder zu Hilfe, um zwei Schweißbacken mit nahezu gleicher Kraft auf Gegenbacken zu pressen. Wenn der Abtrieb von der Drehstabfeder auf die äußeren Hohlwellen über äußere Lager erfolgt, ist es besonders zweckmäßig, wenn die Krafteinleitung in gleichem Abstand zu den äußeren Lagern erfolgt, also etwa im mittleren Bereich. Deshalb ist die Drehstabfeder im Bereich ihrer axialen Mitte angetrieben.

Mit Hilfe der Drehstabfeder werden die gewünschten Drücke über die jeweilige äußere Hohlwelle an den vorgeheizten Schweißbacken herangeführt, so daß die Verschweißvorrichtung einen sehr kompakten Aufbau bekommt. Die Siegelvorrichtung mit der Erwärmung und die Preßvorrichtung für die Siegelnaht befinden sich in ein und derselben Einheit. Die Bauweise der neuen Vorrichtung ist auch deswegen platzsparend, weil ein und dieselbe gemeinsame Drehstabfeder für beide Siegelstationen verwendet wird.

Es kann nicht durch Schmiermittel zu Hygieneproblemen kommen. Die Drehstabfeder ist gekapselt und günstig für den Hygienebereich ausgelegt. Die zwei Schweißbacken können um eine gemeinsame Achse gedreht und so mit Druck beaufschlagt werden, daß sie in der gewünschten kurzen Zeit die Schweißung durchführen; und dies jeweils mit näherungsweise gleichem Druck. Das fertige Produkt, die z.B. mit einer Siegelnaht versehene Fließmittelpackung, zeigt bei stichprobenartigen Prüfungen und auch bei Langzeittests gleichmäßig zuverlässige Dichtigkeit.

Besonders zweckmäßig ist es dabei, wenn erfindungsgemäß beide äußere Hohlwellen axial hintereinander angeordnet und sowohl durch zwei äußere Lager als auch beide durch ein gemeinsames mittleres Lager gelagert sind, wenn sich die Drehstabfeder einstückig über die gesamte Länge von einem zum anderen äußeren Lager erstreckt und wenn das mittlere Lager axial zwischen den zwei Schweißbacken angeordnet ist. Dieser Aufbau gestattet eine symmetrische Einleitung der Kräfte, und auch abtriebsseitig ist eine gute Symmetrie gewährleistet, weil jede Hohlwelle einerseits in ihrem äußeren Lager und andererseits in dem gemeinsamen mittleren Lager abgestützt ist; und beide Hohlwellen an vergleichbaren Stellen angetrieben werden und die Kraft auch ableiten, nämlich zu den Schweißwerkzeugen hin, so daß sich die gewünschte gleichmäßige Druckverteilung ergibt.

Vorteilhaft ist es gemäß der Erfindung besonders, wenn die drehfesten Verbindungen zwischen Drehstabfeder und jeder der beiden äußeren Hohlwellen im Bereich der äußeren Lager angeordnet sind. Der Abstand zwischen dem gemeinsamen mittleren Lager und den beiden äußeren Lagern kann im wesentlichen gleich ausgestaltet und dadurch die Symmetrie der Gesamtanordnung erreicht werden. Wenn die drehfesten Verbindungen im Bereich der äußeren Lager angeordnet sind, läßt sich das Einleiten der Kraft offensichtlich an zum mittleren Lager symmetrischen Stellen durchführen. Eine drehfeste Verbindung kann dabei eine Polygonwelle, eine Vielkeilwelle sein oder auch mittels Paßfedern erfolgen, wie dies der Fachmann selbst unter einer Vielzahl von ihm zur Verfügung stehenden Verbindungen auswählen und entscheiden kann.

In zweckmäßiger Weise ist die Erfindung weiter dadurch ausgestaltet, daß der Antrieb der Drehstabfeder durch eine drehfeste Verbindung derselben mit einer inneren Hohlwelle gebildet ist, welche, die Drehstabfeder umgreifend, sich innerhalb der äußeren Hohlwelle etwa über deren Länge bis in den Bereich des äußeren Lagers erstreckt und dort mit einem radial durch die äußere Hohlwelle nach außen tretenden Antriebsteil versehen ist. Aus diesem Aufbau stechen zwei Vorteile überraschend ins Auge. Erstens kann man den Antrieb von außen an einer Seite des Hohlwellenaufbaues einbringen, also dort, wo Wandungen, Maschinenstützen und dergleichen vorhanden sind, wo Antriebe sich gut anbringen und zu anderen Elementen überleiten lassen. Dennoch ist die oben stehende Symmetrie der Kraftführung gewährleistet, denn durch die innere Hohlwelle wird die von dem äußeren Antriebsteil eingeführte Kraft, z.B. ein Drehmoment, in den Bereich der axialen Mitte der Drehstabfeder geführt. Zweitens erkennt der Fachmann durch die Anordnung der inneren Hohlwelle in der äußeren Hohlwelle und durch die weitere Anordnung der Drehstabfeder, die sich - in der eingangs erwähnten gemeinsamen Achse liegend - durch beide äußeren Hohlwellen erstreckt, einen gekapselten Aufbau. Die Drehstabfeder liegt also als Federelement zentral und ist durch ihre Kapselung durch die Hohlwellen von Umweltbedingungen ferngehalten. Durch diese zentrale Lage ist eine sehr hygienische Lösung möglich, denn äußere Anlenkflächen, Zylinder und Federn im Hygienebereich entfallen mit Vorteil.

Vorteilhaft ist es gemäß der Erfindung weiter, wenn die Drehstabfeder eine flachen Kennlinie in dem Sinne hat, daß bei großer Verformungsveränderung der Drehstabfeder eine verhältnismäßig kleine Kraftveränderung erzielt wird. Es sind die verschiedensten Drehstabfedern auf dem Markt erhältlich. Bei der richtigen Auswahl der Federdurchmesser wird die gewünschte Verdrehlänge und durch den oben beschriebenen Aufbau eine genaue Aufteilung der eingeleiteten Kraft auf zwei an verschiedenen Stellen abgenommene Kraftkomponenten erreicht.

Bevor die Schweißwerkzeuge am Gegenbacken bzw. an dem zwischen den Backen später angeordneten Kartonstreifen anliegen, bewirkt die Aufbringung einer Drehkraft eine entsprechende Verdrehung der vorderen Oberfläche des Schweißwerkzeuges. Nach dem Heranfahren und ab dem Anliegen des jeweiligen Schweißwerkzeuges am Gegenbacken bzw. an dem zwischen den Backen liegenden Kartonstreifen wird die Drehstabfeder durch weitere Betätigung des Antriebes über den durch die äußere Hohlwelle nach außen tretenden Antriebshebel mittels Weiterdrehen der inneren Hohlwelle beidseitig nach außen hin verdreht und damit vorgespannt. Mit dieser Vorspannkraft, die sich aus Drehmoment und Wirkradius ergibt, werden die Schweißwerkzeuge auf die Gegenseite gedrückt.

Die flache Kennlinie der Drehstabfeder ergibt eine verhältnismäßig geringe abzunehmende Kraft bei relativ großer Verformung bzw. großer Veränderung des Drehwinkels, wo der Antrieb auf den äußeren Antriebsteil eingeleitet wird. Beachtlich ist der kleine Einbauraum, in welchem diese Kraftführung und Verteilung der Kraft in diesem engen Toleranzfeld ermöglicht ist.

Es kommt beim Einbau einer Packungsmaschine mit zwei axial hintereinander angeordneten Schweißwerkzeugen in der Praxis immer wieder vor, daß die Vorderfläche des einen Werkzeuges um 1 oder 2 mm vor die Vorderfläche des anderen Werkzeuges übersteht. In diesem Falle bringt die erwähnte flache Kennlinie gemäß der Erfindung den Vorteil, daß trotz dieser Wegdifferenz die Einleitung der zentralen Kraft auf beide Schweißwerkzeuge gleichmäßig verteilt wird, so daß beide Schweißbacken mit fast der gleichen Kraft auf die gegenüberliegende Fläche gepreßt werden. Die flache Kennlinie gibt sogar den Vorteil, daß Fehlereinflüsse von der Antriebsseite her im Schweißbereich weitgehend ohne Einfluß bleiben. Dies hat deshalb Bedeutung, weil im Laufe eines längeren Betriebes auf der Antriebsseite durchaus Abrieberscheinungen auftreten, z.B. sich Büchsen ausschlagen. Solche Verschleißfehler wirken sich dann fast nicht als Veränderung der Kraft aus, die letztlich für den Schweißdruck zwischen den Backen sorgt. In Verbindung mit der oben erwähnten Verteilung des Kraftflusses von der Mitte nach außen sorgt die flache Kennlinie für eine weitere Vergleichmäßigung der Kräfteverteilung an den Enden, wo die Kräfte abgenommen werden. Häufig wird eine Kraftveränderung oder auch eine Kraftabweichung zwischen dem einen und dem anderen der beiden Schweißwerkzeuge von etwa nur bis 10 % zugelassen. Diese Toleranz kann durch den Aufbau gemäß der Erfindung ohne weiteres erreicht werden. Versuche haben gezeigt, daß infolge der Fertigungstoleranz der Drehstabfeder eine Kraftfehlertoleranz von nur 3 % maximal erreichbar ist. Diese Messungen gelten auch für Schweißkräfte von etwa 1300 Newton pro Schweißseite.

Der Druck beim Schweißen kann mit dem erfindungsgemäßen Aufbau insbesondere durch ein Überdrehen der Drehstabfeder erreicht werden. Wenn beispielsweise die Vorderfläche des jeweiligen Schweißwerkzeuges gerade mit dem Werkstück in Anlage gekommen ist, dann wird durch Weiterdrehen der inneren Hohlwelle von z.B. 10° Verdrehwinkel ein Überhub und damit eine Druckkraft zwischen den beiden Schweißbacken erreicht.

Zur exakten Bewegung ist es zweckmäßig, größere Schweißwerkzeuge über zwei im Abstand voneinander angeordnete Halterungen zu lagern, z.B. einerseits über die vorstehend beschriebene Anordnung, wo an der Kraftableitestelle die Kraft letztlich über einen Verbindungsbolzen oder dergleichen auf den Schweißbacken überführt wird; und andererseits über einen Führungshebel, der eine sehr gute Parallelität bei der Bewegung des Schweißwerkzeuges gewährleistet.

Im Gegensatz zu den herkömmlichen hydraulischen Systemen, bei denen im erfindungsgemäßen Einsatz Störanfälligkeiten festgestellt würden, braucht hier durch das mechanische Prinzip der Drehstabfeder keine aufwendige Servorproportionaltechnik eingeschaltetzu werden. Im Gegensatz zu den ungenau arbeitenden Pneumatiksystemen ist das erfindungsgemäße System mit der Drehstabfeder außerordentlich genau und schnell. Es gibt keinen Luft- oder Ölverbrauch, man braucht nicht auf undichte Stellen wie bei den Hydraulik- oder Pneumatiksystemen zu achten, und auch der Abrieb und die aufwendige Kapselung bei Tellerfedersystemen entfällt erfindungsgemäß mit Vorteil. Es versteht sich, daß besonders günstig die Verwendung der vorstehend beschriebenen Vorrichtung für das Ultraschallschweißen und/oder das Impulsschweißen und/oder das induktive Schweißen ist. Für alle diese Systeme kann die Kraftaufbringung gemäß der Erfindung sehr interessant sein und bringt mit Sicherheit die erwähnten Vorteile.

Deshalb ist es ganz besonders interessant, wenn erfindungsgemäß die Vorrichtung zum Verschweißen der doppelt gelegten Kartonstreifen in der Quersiegelnaht einer Flüssigkeitspackung verwendet wird.

Weitere Vorteile, Vorteilhafte Merkmale und Anwendungsmöglichkeiten der vorliegenden Erfindung ergeben sich aus der folgenden Beschreibung eines bevorzugten Ausführungsbeispieles in Verbindung mit den Zeichnungen. Es zeigen:
- Figur 1: eine Ansicht entlang der Linie I-I der Figur 2, wobei zwei Schweißwerkzeuge und zwei zu schweißende Packungen angedeutet sind und die Antriebseinrichtung im Schnitt dargestellt ist,
- Figur 2: eine Seitenansicht auf die Antriebseinrichtung, die Halterung und ein Schweißwerkzeug und
- Figur 3: eine Draufsicht auf Figur 2, wobei jedoch die Antriebseinrichtung teilweise geschnitten dargestellt ist.

Die allgemein mit 1 bezeichnete Antriebseinrichtung besteht im wesentlichen aus einer um eine gemeinsame Achse 2 drehbare Drehstabfeder 3 aus hochfestem Stahl, die etwa auf der Mitte ihrer Länge L von einem mittleren Lager 4 und außen über ein linkes äußeres Lager 5, z.B. ein in einem ortsfesten Support 5' angeordnetes Nadellager 5'', sowie über ein rechtes äußeres Lager 6, z.B. ein in einer ortsfesten Lagerbüchse 6' angeordnetes Wälzlager 6'', gelagert ist. Diese Lagerung erfolgt über Hohlwellen im einzelnen durch den nachfolgend beschriebenen Aufbau.

In der ortsfesten mittleren Lagerbüchse 4' des mittleren Lagers 4 stützen Kugellager 4'' eine sich nach links aus dem mittleren Lager 4 bis zum äußeren Lager 5 erstreckende linke äußere Hohlwelle 7, die zur zentralen Achse 2 und zur Drehstabfeder 3 koaxial liegt und auf der linken äußeren Seite durch das beschriebene Nadellager 5'' im linken äußeren Lager 5 abgestützt ist. Das mittlere Kugellager 4'' des mittleren Lagers 4 stützt eine sich nach rechts erstreckende innere Hohlwelle 8 ab, die an ihrem rechten äußeren Ende in Wälzlagern 6''' gegen eine rechte äußere Hohlwelle 9 abgestützt ist. Diese ihrerseits ist im rechten äußeren Lager 6 über die erwähnten Wälzlager 6'' und im mittleren Bereich über das rechte Kugellager 4'' im mittleren Lager 4 gehaltert.

Die Drehstabfeder 3 hat mit den Hohlwellen drehfeste Verbindungen. Von der Antriebsseite her, die sich im Bereich des rechten äußeren Lagers 6 befindet, wird die Antriebskraft F_{ges} in Richtung des Pfeiles 10 über einen Antriebsbolzen 11 eingeleitet, mit dessen Hilfe über einen Hebel 12 ein Moment auf die rechte innere Hohlwelle 8 aufgebracht wird, denn dieser Hebel 12 ist mit der Hohlwelle 8 im Bereich des rechten äußeren Lagers 6 verbunden. Auf diese Weise ist also die Antriebsdrehung der rechten inneren Hohlwelle 8 möglich. Ihre Abtriebsseite ist links im Bereich des mittleren Lagern 4. Dort erkennt man die erste drehfeste Verbindung 13 in Gestalt eines Polygons. Entsprechende Polygongestalt hat der Drehstab 3 in seinem mittleren Bereich, denn diese erste drehfeste Verbindung 13 befindet sich etwa auf halber Länge L des Drehstabes 3 im Bereich der rechten Kugellager 4'' des mittleren Lagers 4. An dieser drehfesten Verbindung 13 erfolgt die Überleitung der Drehkraft von der rechten inneren Hohlwelle 8 auf den Drehstab 3, der also in seiner Mitte angetrieben wird und die Kraft an seine äußeren Enden weltergibt. In der rechten und linken Hälfte des Drehstabes 3 entsteht die Torsionsfederwirkung. Die linke Hälfte des Drehstabes 3 erstreckt sich durch die äußere linke Hohlwelle 7 und steht mit dieser über die zweite drehfeste Verbindung 14 in Antriebseingriff. Das linke äußere Ende der linken äußeren Hohlwelle 7, welches in dem linken äußeren Lager 5 gehaltert ist, erhält also die Antriebskraft über diese zweite drehfeste Verbindung 14 und leitet sie nach rechts zu einer Klemmverbindung 15 weiter, an welcher das Schweißwerkzeug angebracht ist, wie nachfolgend noch beschrieben wird.

Im mittleren Lager 4 wird über die erste drehfeste Verbindung 13 zwischen der rechten inneren Hohlwelle 8 und dem Drehstab 3 die Kraft in dessen rechte Hälfte nach rechts bis in den Bereich des rechten äußeren Lagers 6 geführt, im eigentlichen Sinne sogar über dieses hinaus, denn die Drehstabfeder 3 weist an ihrem rechten Ende die dritte drehfeste Verbindung 16 auf, über welche die Drehkraft auf eine Kupplungsplatte 17 übergeleitet wird. Diese Kupplungsplatte 17 ist mittels Schrauben 18 an der rechten äußeren Hohlwelle 9 angebracht, so daß über diese Kupplungsplatte 17 die Antriebskraft auf die rechte äußere Hohlwelle 9 geführt wird. In dieser wird die Kraft schließlich in axialer Richtung in die Nähe zum mittleren Lager 4 hin geführt, nämlich in die Klemmverbindung 15a, die ähnlich aufgebaut ist wie die Klemmverbindung 15.

An den stirnseitigen Enden der Drehstabfeder 3 schließen Kappen 19 den Support 5' bzw. die Kupplungsplatte 17 und die gekapselte Anordnung der Drehstabfeder 3 nach außen ab. Man erkennt deutlich den gekapselten Aufbau dieser Antriebseinrichtung 1.

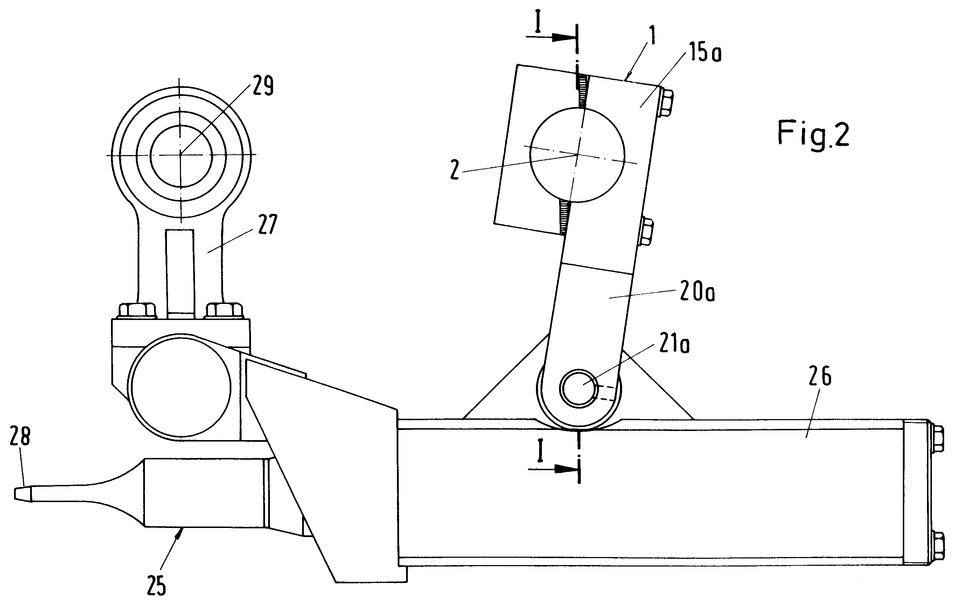

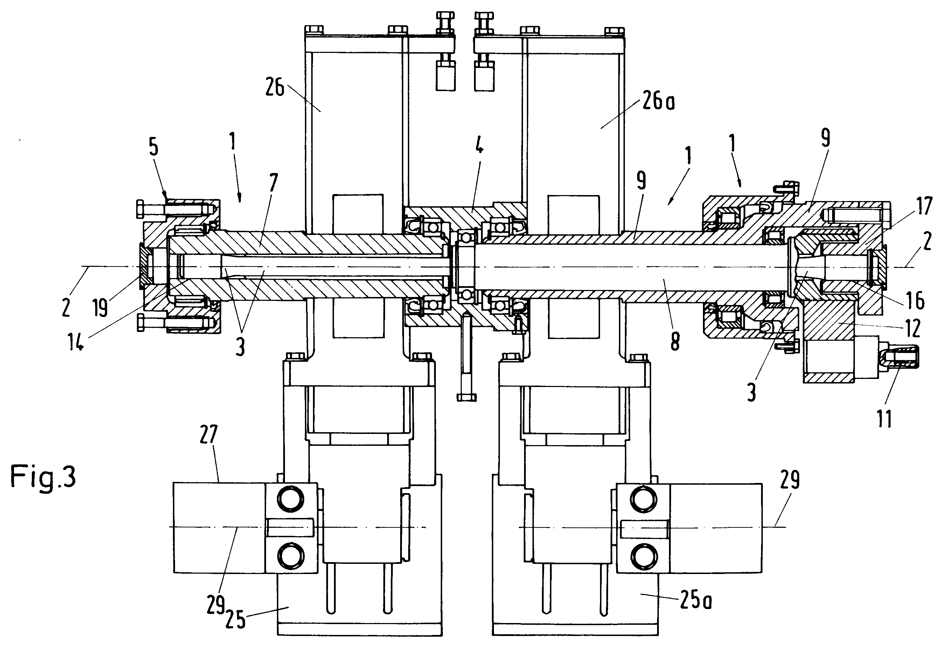

Die am Antriebsbolzen 2 eingeleitete Kraft 10 kommt also über die vorstehend beschriebenen Kraftfließwege bei den Klemmverbindungen 15 und 15a an und wird von dort über Hebel 20, 20a in den Bolzen 21 bzw. 21a eingeleitet, um von hier die Schweißkraft F bzw. Fa in die in den Figuren 2 und 3 gezeigten Schweißwerkzeuge 25 und 25a zu leiten.

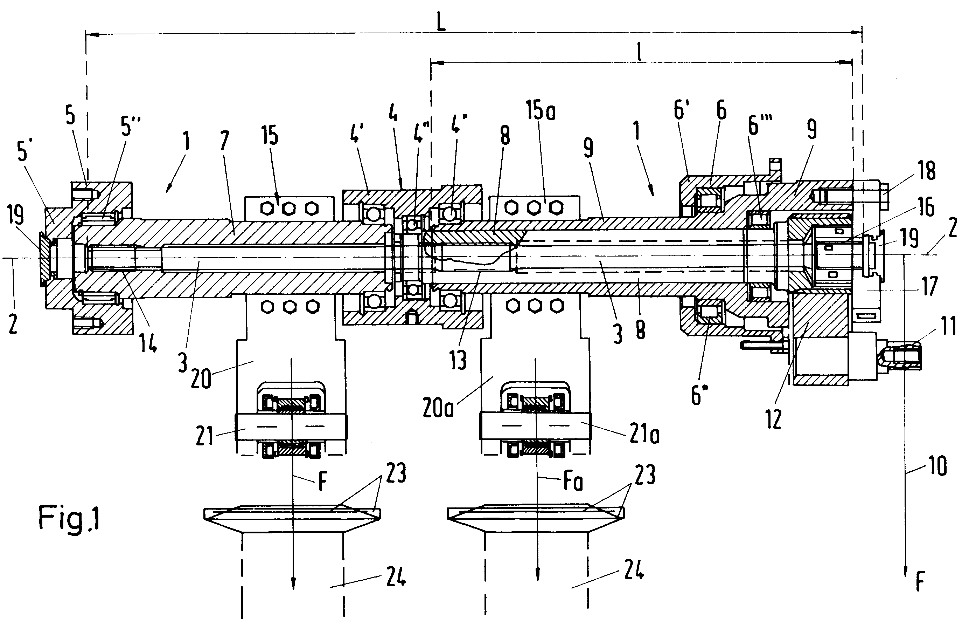

Verschweißt werden soll die in Figur 1 in der Mitte unten gezeigte Siegelnaht 23 einer Flüssigkeitspackung 24, deren aus mit Kunststoff beschichtetem Papier gebildeter Tubus mit teilweise schon zur Quersiegelnaht 23 angeformtem Boden gestrichelt angedeutet sind.

Für das Verschweißen der Siegelnaht 23 wird als Schweißwerkzeug bei dem hier gezeigten besonders bevorzugten Fall der Ultraschallschweißung eine Sonotrode 25 verwendet. In Figur 3 ist die Draufsicht auf die Darstellung der Figur 2 wiedergegeben, wobei man die gleichartige und symmetrische Anordnung und Aufhängung der Schweißwerkzeuge 25 erkennt. Da beide Schweißwerkzeuge gleich ausgebildet sind, genügt die Beschreibung eines dieser Werkzeuge. Die Halterung 26 des Schweißwerkzeuges 25 erfolgt über den erwähnten Bolzen 21 bzw. 21a, über welchen die von dem Hebel 20 bzw. 20a eingeleitete Kraft auf das Schweißwerkzeug 25, 26 geführt wird.

Für eine präzise Parallelogrammbewegung ist ferner ein Führungshebel 27 an der Halterung 26 für das Schweißwerkzeug weiter vorn zur Spitze 28 des Schweißwerkzeuges hin angebracht. Der Führungshebel 27 ist im Kreisbogen um die Achse 29 schwenkbar.

Die flache Kennlinie der Drehstabfeder 3 ist so zu erläutern, daß im kartesischen Koordinatensystem auf der horizontalen Achse der Verdrehwinkel der Drehstabfeder 3 und auf der senkrecht dazu stehenden Ordinate die Kraft aufgetragen zu denken ist, welche gemäß den Pfeilen F und Fa in Figur 1 z.B. über den Bolzen 21 bzw. 21a auf das Schweißwerkzeug 25 geleitet wird. Die Federkennlinie ist flach, wenn großen Werten des Verdrehwinkels relativ kleine Werte der Kraft entsprechen. Die genaue Neigung einer durch den Ursprung des kartesischen Koordinatensystems einerseits und den Meßpunkt Verdrehwinkel/Kraft andererseits gelegten Gerade ergibt sich entsprechend der Bemessung und des Materials der Drehstabfeder.

Durch die Aneinanderordnung zweier Schweißwerkzeuge 25 und 25a über die Klemmverbindungen 15, 15a, d.h. also in axialer Richtung der Drehstabfeder 3 hintereinander, kann man eine kompakte Siegelstation bauen, für deren Kraftübertragung wenig Platz benötigt wird. Hierdurch kann man auch einen schnellen Betrieb gewährleisten. Bei einer bevorzugten, konkreten Ausführungsform hat man in einer kurzen Zeit von nur 400 ms die Siegelbacken zusammengefahren und den Schweißdruck aufgebracht. Bei dieser Ausführungsform erfolgte das Falten, Zusammenfahren der Schweißwerkzeuge, Aufbringen des Schweißdruckes, das Schweißen selbst, das nachfolgende Kühlen und das Auseinanderfahren der Schweißwerkzeuge innerhalb von nur 940 ms. Dabei betrug die Kühlzeit allein 100 ms. Dieser schnelle und präzise Betrieb gelingt auf kleinem Raum in sehr hygienischer Weise, denn entsprechend dem oben beschriebenen Aufbau ist die Anordnung gekapselt. Die Standzeit der Drehstabfeder kann noch dadurch erhöht werden, daß ein Konservierungsstoff, wie z.B. Fett, in den Raum um die Drehstabfeder 3 herum eingebracht wird, und diese Drehstabfeder ist weder einem Reinigungsmittel noch dem Produkt der Schweißstation der Maschine ausgesetzt.

Durch die Auswahl der beschriebenen Federkennlinie und den Aufbau sowie die Anordnung der Drehstabfeder erreicht man bei der Verwendung zweier Schweißwerkzeuge eine sehr gute Parallelität, die bei dem gemessenen konkreten Ausführungsbeispiel eine Abweichung von nur wenigen Hundertstel Millimetern erreichte.

## Patentansprüche

1. Vorrichtung zum Verschweißen der Siegelnaht (23) an einer Packung (24), die wenigstens teilweise aus mit Kunststoff beschichtetem Papier besteht, mit einem Backen (25, 28) und Gegenbacken aufweisenden Schweißwerkzeug (25; 25a), einer Halterung (26, 27) und einer Antriebseinrichtung (1) für die Erzeugung der Druckkraft, dadurch gekennzeichnet, daß zwei Schweißbacken (25, 25a) über Antriebselemente (Hebel 20, 21) um eine gemeinsame Achse (2) drehbar auf jeweils einer getrennten äußeren Hohlwelle (7, 9) drehfest angebracht sind, jede äußere Hohlwelle (7, 9) mit einer gemeinsamen Drehstabfeder (3) als Teil der Antriebseinrichtung (1) drehfest verbunden (in 14; 16, 17) ist und die Drehstabfeder (3) im Bereich ihrer axialen Mitte (bei 13) von außen (bei 11, 12) angetrieben ist.

2. Vorrichtung nach Anspruch 1, dadurch gekennzeichnet, daß beide äußeren Hohlwellen (7, 9) axial hintereinander angeordnet und sowohl durch zwei äußere Lager (5, 6) als auch beide durch ein gemeinsames mittleres Lager (4) gelagert sind, daß sich die Drehstabfeder (3) einstückig über die gesamte Länge (L) von einem zum anderen äußeren Lager (5, 6) erstreckt und daß das mittlere Lager (4) axial zwischen den zwei Schweißbacken (25) angeordnet ist.

3. Vorrichtung nach Anspruch 1 oder 2, dadurch gekennzeichnet, daß die drehfesten Verbindungen (13, 14, 16) zwischen Drehstabfeder (3) und jeder der beiden äußeren Hohlwellen (7, 9) im Bereich der äußeren Lager (5, 6) angeordnet sind.

4. Vorrichtung nach einem der Ansprüche 1 bis 3, dadurch gekennzeichnet, daß der Antrieb der Drehstabfeder (3) durch eine drehfeste Verbindung (13) derselben mit einer inneren Hohlwelle (8) gebildet ist, welche, die Drehstabfeder (3) umgreifend, sich innerhalb der äußeren Hohlwelle (9) etwa über deren Länge (l) bis in den Bereich des äußeren Lagers (6) erstreckt und dort mit einem radial durch die äußere Hohlwelle (9) nach außen tretenden Antriebsteil (12) versehen ist.

5. Vorrichtung nach einem der Ansprüche 1 bis 4, dadurch gekennzeichnet, daß die Drehstabfeder (3) eine flachen Kennlinie in dem Sinne hat, daß bei großer Verformungsveränderung der Drehstabfeder (3) eine verhältnismäßig kleine Kraftveränderung erzielt wird.

6. Verwendung der Vorrichtung nach einem der Ansprüche 1 bis 5 für das Ultraschall-, Impuls- und/oder induktive Schweißen.

7. Verwendung nach Anspruch 6 zum Verschweißen der doppelt gelegten Kartonstreifen in der Quersiegelnaht (23) einer Flüssigkeitspackung (24).

## Claims

1. Apparatus for welding the sealing seam (23) on a pack (24) which at least partially comprises plastics-coated paper, comprising a welding tool (25; 25a) with jaw (25, 28) and co-operating jaw, a holding means (26, 27) and a drive means (1) for producing the pressure force, characterised in that two welding jaws (25, 25a) are mounted non-rotatably on respective separate outer hollow shafts (7, 9) rotatably about a common axis (2) by way of drive elements (levers 20, 21), each outer hollow shaft (7, 9) is non-rotatably connected (at 14; 16, 17) to a common torsion bar spring (3) as part of the drive means (1) and the torsion bar spring (3) is driven in the region of its axial centre (at 13) from the exterior (at 11, 12).

2. Apparatus according to claim 1 characterised in that the two outer hollow shafts (7, 9) are arranged in axial succession and are supported both by two outer bearings (5, 6) and also both by a common central bearing (4), that the torsion bar spring (3) extends integrally over the entire length (L) from one outer bearing (5, 6) to the other and that the central bearing (4) is arranged axially between the two welding jaws (25).

3. Apparatus according to claim 1 or claim 2 characterised in that the non-rotatable connections (13, 14, 16) between the torsion bar spring (3) and each of the two outer hollow shafts (7, 9) are arranged in the region of the outer bearings (5, 6).

4. Apparatus according to one of claims 1 to 3 characterised in that the drive for the torsion bar spring (3) is formed by a non-rotatable connection (13) thereof to an inner hollow shaft (8) which, embracing the torsion bar spring (3), extends within the outer hollow shaft (9) substantially over the length (l) thereof into the region of the outer bearing (6) and is there provided with a drive portion (12) which passes radially outwardly through the outer hollow shaft (9).

5. Apparatus according to one of claims 1 to 4 characterised in that the torsion bar spring (3) has a flat characteristic in the sense that with a high degree of change in deformation of the torsion bar spring (3) a comparatively low degree of change in force is produced.

6. Use of the apparatus according to one of claims 1 to 5 for ultrasonic, impulse and/or inductive welding.

7. Use according to claim 6 for welding the doubled cardboard strips in the transverse sealing seam (23) of a liquid pack (24).

## Revendications

1. Dispositif pour souder le joint thermoscellé (23) à un emballage (24), qui est constitué au moins partiellement d'un papier enduit de plastique, avec un outil de soudage (25 ; 25a) comportant une mâchoire (25, 28) et une contre-mâchoire, un support (26, 27) et un dispositif d'entraînement (1) destiné à produire la force de compression, caractérisé en ce que deux mâchoires de soudage (25, 25a) sont, par l'intermédiaire d'éléments d'entraînement (leviers 20, 21), rapportés, en rotation autour d'un axe commun (2), en étant fixes en rotation sur un arbre creux extérieur distinct (7, 9), chaque arbre creux extérieur (7, 9) étant relié d'une manière fixe en rotation à un ressort commun à barre de torsion (3), servant d'élément du dispositif d'entraînement (1), les ressorts à barre de torsion (3) étant, dans la zone de leur milieu axial (en 13) entraînés de l'extérieur (en 11, 12).

2. Dispositif selon la revendication 1, caractérisé en ce que les deux arbres creux extérieurs (7, 9) sont disposés axialement l'un en arrière de l'autre, et sont soutenus tant par deux paliers extérieurs (5, 6) que par un palier central moyen (4) ; que les ressorts à barre de torsion (3) s'étendent d'une seule pièce sur toute la longueur (L), de l'un des paliers extérieurs (5, 6) à l'autre palier extérieur ; et que le palier central (4) est disposé axialement entre les deux mâchoires de soudage (25).

3. Dispositif selon la revendication 1 ou 2, caractérisé en ce que les assemblages fixes en rotation (13, 14, 16) entre les ressorts à barre de torsion (3) et chacun des deux arbres creux extérieurs (7, 9) sont disposés dans la zone des paliers extérieurs (5, 6).

4. Dispositif selon l'une des revendications 1 à 3, caractérisé en ce que l'entraînement des ressorts à barre de torsion (3) est réalisé par un assemblage fixe en rotation (13) de ces derniers avec un arbre creux intérieur (8), qui, en passant autour des ressorts à barre de torsion (3), c'étend à l'intérieur de l'arbre creux extérieur (9) approximativement sur sa longueur (l) jusqu'à arriver dans la zone du palier extérieur (6), et y est pourvu d'un élément d'entraînement (12), passant radialement vers l'extérieur à travers l'arbre creux extérieur (9).

5. Dispositif selon l'une des revendications 1 à 4, caractérisé en ce que le ressort à barre de torsion (3) a une caractéristique horizontale, en ce sens que, en présence d'une déformation importante du ressort à barre de torsion (3), il se produit une modification relativement petite de la force.

6. Utilisation du dispositif selon l'une des revendications 1 à 5 pour le soudage aux ultrasons, par impulsions et/ou par induction.

7. Utilisation selon la revendication 6, pour souder les bandes de carton posées en double, dans le joint thermoscellé transversal (23) d'un emballage pour liquides (24).
